# EUROPEAN PATENT SPECIFICATION

(11) **EP 1 569 742 B1**
(45) Date de publication et mention de la délivrance du brevet: **05.07.2006**
(21) Numéro de dépôt: 03776906.4
(22) Date de dépôt: 14.11.2003
(51) Int. Cl.: B01D 67/00, B26F 1/31, B01D 69/02

(54) **PROCEDE DE CREATION DE PORES DANS UNE FEUILLE MINCE DE POLYIMIDE**
VERFAHREN ZUR ERZEUGUNG VON POREN IN EINER DÜNNEN FOLIE AUS POLYIMID
METHOD FOR PRODUCING PORES IN A THIN POLYIMIDE SHEET

(30) Priorité: 19.11.2002 FR 0214473
(43) Date de publication de la demande: 07.09.2005
(73) Titulaire: UNIVERSITE CATHOLIQUE DE LOUVAIN, 1348 Louvain la Neuve (BE)
(72) Inventeur: LEGRAS, Roger, B-4280 Hannut (BE); FERAIN, Etienne, B-7050 Masnuy-Saint-Jean (BE)
(74) Mandataire: Breese Derambure Majerowicz
(86) Numéro de dépôt international: PCT/EP2003/012780
(87) Numéro de publication internationale: WO 2004/045750

(56) Documents cités:
- WO-A-01/49402
- WO-A-01/49403
- DE-A- 3 816 078
- L.KLINTBERG ET AL: "Sodium hypochlorite as a developer for heavy ion tracks in polyimide" NUCLEAR INSTRUMENTS AND METHODS IN PHYSICS RESEARCH B, vol. 184, 2001, page 536-543, XP004313112 Amsterdam,NL
- A.I.VILENSKY ET AL: "Polyimide Track Membranes for Ultrafiltration and Microfiltration" POLYMER SCIENCE, vol. 36, no. 3, 1994, page 391-400, XP000434424 Birmingham,AL,US
- P.YU.APEL ET AL: "Morphology of latent and etched heavy ion tracks in radiation resistant polymers polyimide and poly(ethylene naphthalate)" NUCLEAR INSTRUMENTS AND METHODS IN PHYSICS RESEARCH B, vol. 185, 2001, page 216-221, XP004326838 Amsterdam,NL

## Description

L'invention concerne un procédé de création de pores de taille nanométrique à micrométrique dans une feuille mince de polyimide, ainsi qu'une feuille mince de polyimide obtenue par ce procédé.

On connaît déjà des procédés de création de pores de taille nanométrique à micrométrique dans un matériau polymère en feuille, tel que le polytéréphtalate d'éthylène ou le polycarbonate.

Toutefois, ces matériaux ne présentent pas une grande résistance thermique. Le polycarbonate, par exemple, présente de bien moins bonnes propriétés au-delà de 150°C.

A l'inverse, les polyimides conservent leurs excellentes propriétés physiques, électriques et mécaniques dans une très large gamme de températures, et en particulier à des températures très hautes (au-delà de 400°C) ou très basses.

Ainsi, l'utilisation des polyimides est particulièrement recherchée dans certaines applications, et de nouvelles applications peuvent mêmes être envisagées.

A titre d'exemple, les feuilles minces de polyimide comportant des pores de taille nanométrique à micrométrique peuvent être utilisées comme membranes filtrantes, comme support pour synthétiser des filaments ou des tubes, notamment des nanofilaments ou des nanotubes, dans le domaine de la connectique, etc.

Le document A.I.VILENSKY ET AL: "Polyimide Track Membranes for Ultrafiltration and Microfiltration" POLYMER SCIENCE, vol. 36, no. 3, 1994, page 391-400, XP000434424 Birmingham,AL,US. enseigne de créer des pores dans une feuille de polyimide par un bombardement ionique suivi d'une attaque chimique.

Les procédés connus de création de pores de taille nanométrique à micrométrique dans un matériau polymère en feuille sont par exemple décrits dans les demandes internationales de brevet publiés sous les numéros WO 01/49402 et WO 01/49403, et issues de la demanderesse. Ces procédés comprennent les étapes successives consistant à soumettre la feuille à :
- un bombardement ionique ;
- un rayonnement UV ;
- une attaque chimique.

Toutefois, ces procédés ne s'appliquent pas avec succès aux polyimides.

En effet, la demanderesse a constaté que l'emploi de ce procédé sur des feuilles de polyimide conduit à l'obtention de pores de diamètres très différents et de forme non cylindrique, ce qui n'est pas souhaitable dans de nombreuses applications. La forme et la constance du diamètre des pores peuvent être améliorées, mais des attaques chimiques de plusieurs heures sont alors nécessaires.

L'invention a pour but de résoudre ces problèmes, en fournissant un procédé permettant de créer dans une feuille mince de polyimide des pores de forme sensiblement cylindrique et de diamètres sensiblement égaux, le procédé ne nécessitant pas une étape d'attaque chimique de durée importante.

A cet effet, et selon un premier aspect, l'invention concerne un procédé de création de pores de taille nanométrique à micrométrique dans une feuille mince de polyimide, dans lequel la feuille est soumise, dans cet ordre, à :
- un bombardement ionique ;
- un rayonnement dans le domaine du visible ;
- une attaque chimique.

L'irradiation de la feuille dans le domaine du visible permet d'augmenter la quantité de dommages occasionnés dans la feuille le long de la trajectoire des ions préalablement bombardés sur ladite feuille - ce qui n'est pas le cas avec une irradiation par UV, comme l'a constaté la demanderesse.

Il s'ensuit que l'attaque chimique de la feuille est plus rapide au niveau de ces dommages, ce qui conduit à la formation de pores de forme sensiblement cylindrique, et de diamètres sensiblement égaux.

Selon l'invention, la feuille est soumise à un rayonnement dont la longueur d'onde est comprise entre 360 et 550 nm, voire entre 450 et 530 nm.

Selon une réalisation possible, on utilise une source émettant dans le domaine du visible et qui dégage une quantité de chaleur suffisamment faible pour ne pas nécessiter de refroidissement de la feuille.

Par exemple, la feuille est soumise au rayonnement d'une ou de plusieurs LED, émettant à des longueurs d'onde comprises entre 450 et 530 nm, pendant une durée comprise entre 1 et 10 heures.

La feuille peut également être soumise au rayonnement d'un spot halogène pendant une durée de l'ordre de 10 heures à une semaine, ou au rayonnement d'une source UV - Hg couplée à un filtre UV, émettant à des longueurs d'onde comprises entre 360 et 580 nm.

Selon d'autres caractéristiques, la feuille est soumise à l'attaque chimique pendant moins d'une heure, voire moins de 15 minutes. L'attaque chimique peut être effectuée par une solution de NaOCl de concentration comprise entre 0,01 N et 5 N à une température comprise entre 30 et 100°C.

Après avoir subi le bombardement ionique et avant d'être soumise au rayonnement dans le domaine du visible, la feuille peut être soumise à un traitement thermique global, certaines zones prédéterminées de la feuille seulement étant soumises audit rayonnement, de sorte à réaliser un « patterning ».

Enfin, selon un deuxième aspect, l'invention concerne une feuille mince de polyimide comportant des pores de taille nanométrique à micrométrique, obtenue par le procédé tel que précédemment décrit, les pores étant sensiblement cylindriques et présentent des diamètres sensiblement égaux selon la revendication 14.

La feuille présente par exemple une épaisseur comprise entre 2 et 100 µm. Selon une autre réalisation, la feuille présente une épaisseur comprise entre 5 nm et 10 µm, et est déposée sur un support.

Les autres caractéristiques de l'invention résultent de la description qui suit de modes de réalisation, description effectuée en référence aux figures annexées dans lesquelles :
- la figure 1 est une représentation schématique des différentes étapes du procédé selon un premier mode de réalisation de l'invention ;
- la figure 2 est une photographie prise au microscope électronique à balayage (MEB) de la surface d'une feuille de polyimide, déposée sur un support en silicium, présentant des pores obtenus par le procédé schématisé sur la figure 1 ;
- les figures 3a à 3c, 4a à 4c et 5a, 5b sont des photographies prises au MEB de nanotubes réalisés à partir d'une feuille de polyimide présentant des pores obtenus par le procédé schématisé sur la figure 1 ;
- la figure 6 est une représentation schématique des différentes étapes du procédé selon un deuxième mode de l'invention, permettant de réaliser un « patterning » ;
- les figures 7a à 7c sont des photographies prises par transparence en microscopie optique d'une feuille de polyimide présentant des pores obtenus par le procédé schématisé sur la figure 6.

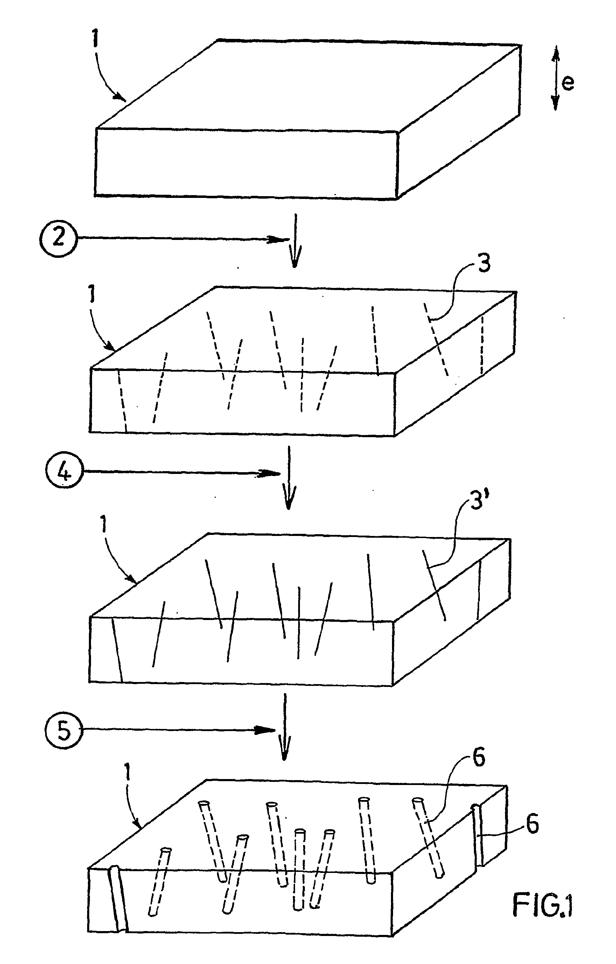

On se réfère tout d'abord à la figure 1.

Le procédé est appliqué à une feuille mince 1 de polyimide, par exemple une feuille mince de KAPTON ®, commercialisée par DuPont.

Le KAPTON ® est synthétisé par une réaction de polycondensation entre un dianhydride aromatique et une diamine aromatique. On ne lui connaît aucun solvant organique, il ne fond pas et résiste très bien à la flamme. Ces propriétés remarquables permettent de l'employer dans une large plage de températures (applications pratiques à des températures pouvant s'abaisser à -269°C et s'élever à 400°C).

L'expression « feuille mince » désigne :
- soit un film isolé, c'est-à-dire non déposé sur un support, présentant une épaisseur e de plusieurs microns, par exemple comprise entre 2 et 100 µm ;
- soit une couche « spin coated » présentant une épaisseur e de quelques nanomètres à plusieurs microns, exemple comprise entre 5 nm et 10 µm, déposée sur un support mince, tel qu'un support en silicium, dont l'épaisseur peut varier de plusieurs centaines de microns à plusieurs millimètres.
   Une telle feuille peut être obtenue par le dépôt, sur un support en silicium, d'une solution de monomère dans un solvant, puis chauffage de l'ensemble de façon à créer une mince couche de polyimide sur le support.
   On peut par exemple utiliser une solution de 14 à 20 % en masse d'acide polyamique dans du N-méthyl-2-pyrrolidone (PI2808, disponible dans le commerce), et effectuer un premier chauffage à 90°C pendant 30 minutes, puis un deuxième chauffage à 400°C pendant 1 heure.

Le procédé selon l'invention est identique pour un film isolé ou une couche déposée sur un support.

La feuille 1 est tout d'abord soumise à un bombardement ionique 2.

Le bombardement 2 est effectué par un faisceau d'ions énergétiques, de préférence des ions lourds issus de gaz rares tels que le xénon, un tel faisceau étant par exemple obtenu par un accélérateur de particules tels qu'un cyclotron à secteurs séparés.

L'énergie du faisceau est de l'ordre de 570 MeV (mégaélectronvolt), la densité d'ions bombardant la feuille 1 étant comprise entre 10⁴ et 10¹³ ions/cm².

D'autres ions peuvent être utilisés pour le bombardement 2, tels que des ions issus de l'argon, du krypton, du cobalt, du plomb, de l'or, ou de l'uranium. L'énergie de ces ions est comprise entre 1 et 10 MeV/amu (atomic mass unit, ou unité de masse atomique), l'intensité du faisceau pouvant varier entre 10⁶ et 10¹³ ions/s.

Le bombardement 2 est effectué sur une seule face de la feuille 1, l'énergie des ions étant suffisante pour que ceux-ci traversent toute l'épaisseur e de ladite feuille 1.

La feuille 1 peut se présenter sous la forme d'une bande défilant sensiblement perpendiculairement au faisceau d'ions, ledit faisceau effectuant un balayage de sorte que chaque zone de la bande soit bombardée à plusieurs reprises.

Le long de leur trajectoire à l'intérieur de la feuille 1, les ions provoquent des modifications physico-chimiques du polyimide, créant ainsi des dommages dans la feuille 1, formant des traces 3, représentées en pointillés sur la figure 1.

Le bombardement 2 de la feuille 1, s'il est effectué avec une énergie minimale, conduit ainsi à la formation de traces 3 qui pourront être attaquées chimiquement lors d'une étape ultérieure. Ce bombardement 2 est l'étape qui conditionne la densité des pores qui seront créés dans la feuille 1.

Ensuite, la feuille 1 est soumise à un rayonnement 4 dans le domaine du visible.

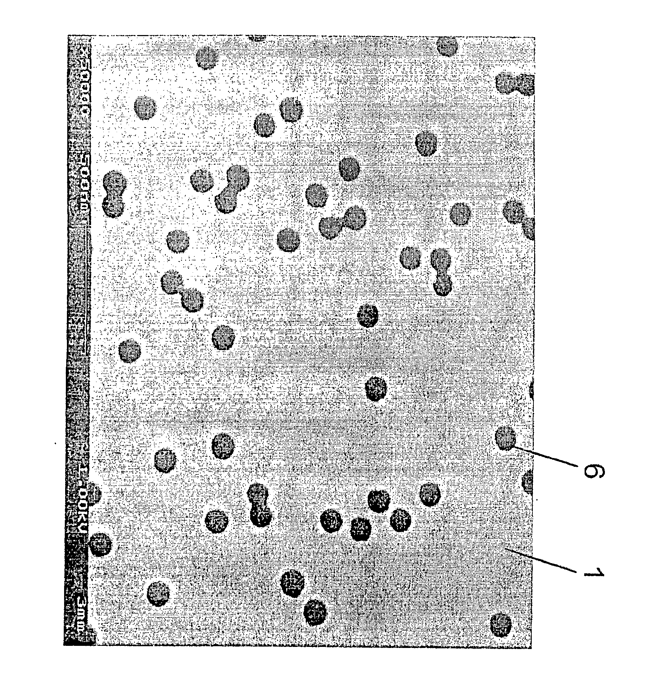

Le fait de soumettre la feuille 1 au rayonnement visible 4 permet d'augmenter la quantité de dommages le long des traces 3, sensibilisant les traces 3 et créant ainsi des traces 3' plus marquées, représentées en traits pleins sur la figure 2.

De ce fait, les traces 3' plus marquées seront plus rapidement attaquées chimiquement lors d'une étape ultérieure, ce qui conduira à l'obtention de pores de diamètre sensiblement cylindrique, par comparaison à une attaque chimique lente qui conduit à l'obtention de pores de forme mal contrôlée.

Selon une première variante, la feuille 1 est soumise au rayonnement d'une ou plusieurs LED (light emitting diode ou diode électroluminescente), par exemple d'une source lumineuse composée de 100 LED dont la puissance individuelle est comprise entre 1 et 10 mW.

Des LED émettant dans le bleu (entre 450 et 490 nm, avec une intensité maximale au voisinage de 470 nm) ou des LED émettant dans le bleu-vert (entre 470 et 540 nm, avec une intensité maximale au voisinage de 510 nm) peuvent par exemple être utilisées.

Une irradiation de courte durée, environ 8 heures, avec une telle LED est efficace pour la sensibilisation des traces 3 créées dans la feuille 1 par le bombardement 2 (pour un film isolé ou une couche déposée sur un support).

L'irradiation de la feuille 1 par une LED ne conduit pas à un échauffement de ladite feuille 1 et ne risque donc pas d'effacer partiellement les traces 3. En conséquence, aucun refroidissement de la feuille 1 n'est nécessaire et les traces 3' plus marquées seront rapidement attaquées chimiquement, conduisant ainsi à la création de pores sensiblement cylindriques.

Selon une deuxième variante, la feuille 1 est soumise au rayonnement d'un spot halogène, pendant une durée de l'ordre de 10 heures à une semaine. Le rayonnement du spot halogène couvre par exemple des longueurs d'onde comprises entre 380 et 850 nm.

On obtient également une sensibilisation des traces 3 créées dans la feuille 1, moyennant une irradiation plus longue et un refroidissement par air de ladite feuille 1, afin d'éviter un effacement partiel des traces 3.

Selon une troisième variante, la feuille 1 est soumise au rayonnement d'une source UV-Hg émettant dans une large gamme de longueurs d'onde, par exemple entre 200 et 580 nm, pendant 10 heures.

La combinaison de la source UV-Hg et d'un filtre UV coupant les longueurs d'onde inférieures à 360 nm conduit à une sensibilisation efficace des traces 3 créées dans la feuille 1. Plus les doses d'irradiation sont élevées, plus la vitesse d'attaque chimique des traces 3' plus marquées, lors d'une étape ultérieure, sera importante.

Toutefois, la source UV-Hg dégage une quantité de chaleur importante. Afin d'éviter un effacement partiel des traces 3 suite à l'augmentation résultante de la température de la feuille 1, il est nécessaire de refroidir ladite feuille 1 par une circulation d'eau. Ceci peut être délicat à mettre en oeuvre.

Enfin, la feuille 1 dans laquelle ont été créées des traces 3' plus marquées est soumise à une attaque chimique 5.

La feuille 1 est plongée dans une solution corrosive, telle qu'une solution aqueuse de NaOCl, de pH compris entre 7,5 et 13, et de température comprise entre 30 et 100°C. La concentration de la solution peut varier entre 0,01 N et 5 N.

D'autres solutions peuvent être utilisées pour l'attaque chimique de la feuille 1. A titre d'exemple, on peut citer : NaOH, KOH, NH₄OH, (CH₃)₄NOH, une solution d'acide sulfurique et de peroxyde d'hydrogène.

Les parties de la feuille 1 endommagées par les étapes précédentes du procédé, à savoir les traces 3' plus marquées, sont rapidement attaquées par la solution corrosive. La durée de l'attaque chimique est ainsi inférieure à 1 heure, voire inférieure à 15 minutes.

Il en résulte la formation de pores 6 de forme sensiblement cylindrique, c'est-à-dire dont le diamètre varie de moins de 20 % sur toute l'épaisseur e de la feuille 1, et de diamètres sensiblement égaux, c'est-à-dire répartis dans une gamme de ± 10 % autour d'une valeur moyenne.

Selon les paramètres utilisés lors de la mise en oeuvre du procédé, le diamètre des pores 6 peut varier de 10 nm à 10 µm.

Les feuilles 1 sont ensuite lavées jusqu'à neutralisation du pH, rincées et séchées. Les différentes étapes du procédé peuvent être réalisées en continu, la feuille 1, sous forme de bande, se délaçant de sorte que chaque zone de ladite bande soit tout d'abord soumise au bombardement ionique 2, au rayonnement visible 4, puis à l'attaque chimique 5.

La figure 2 représente, vue au MEB, la surface d'une feuille 1 de polyimide déposée sur un support en silicium et présentant des pores 6 obtenus par le procédé de la figure 1. Les pores 6 sont sensiblement cylindriques, et présentent des diamètres sensiblement identiques, de l'ordre de 90 à 95 nm.

La feuille 1 dans laquelle ont été créés les pores 6 peut ensuite être utilisée comme support pour la synthèse de tubes ou filaments 7, notamment des nanotubes ou des nanofilaments, par exemple en métal (cuivre, cobalt, nickel, fer, plomb, bismuth, or, argent...) ou en polymère (polyaniline, polypyrrole, polystyrène...). Bien entendu, la forme des nanotubes ou nanofilaments 7 correspond à la forme des pores 6.

Les nanotubes ou nanofilaments 7 peuvent être synthétisés selon plusieurs méthodes :
- électrodéposition du matériau constitutif des nanotubes ou nanofilaments 7 dans les pores 6, la feuille 1 étant plongée dans un électrolyte et placée, sur l'une de ses faces, sur une électrode ;
- synthèse chimique, le monomère étant introduit dans chaque pore 6 par une première ouverture, située sur une face de la feuille 1, et un initiateur (tel que FeCl₃ par exemple) étant introduit dans chaque pore 6 par une deuxième ouverture, située sur la face opposée de la feuille 1 ;
- dépôt du matériau constitutif des nanotubes ou nanofilaments 7 dans les pores 6 sans électrode, par utilisation de l'activation de la surface des pores 6.

Les nanotubes ou nanofilaments 7 sont ensuite récupérés après dégradation de la feuille 1 de polyimide dans un milieu aqueux à caractère fortement basique et filtration du mélange obtenu au travers d'une membrane en argent. Les nanotubes ou nanofilaments 7 sont retenus à la surface de la membrane en argent.

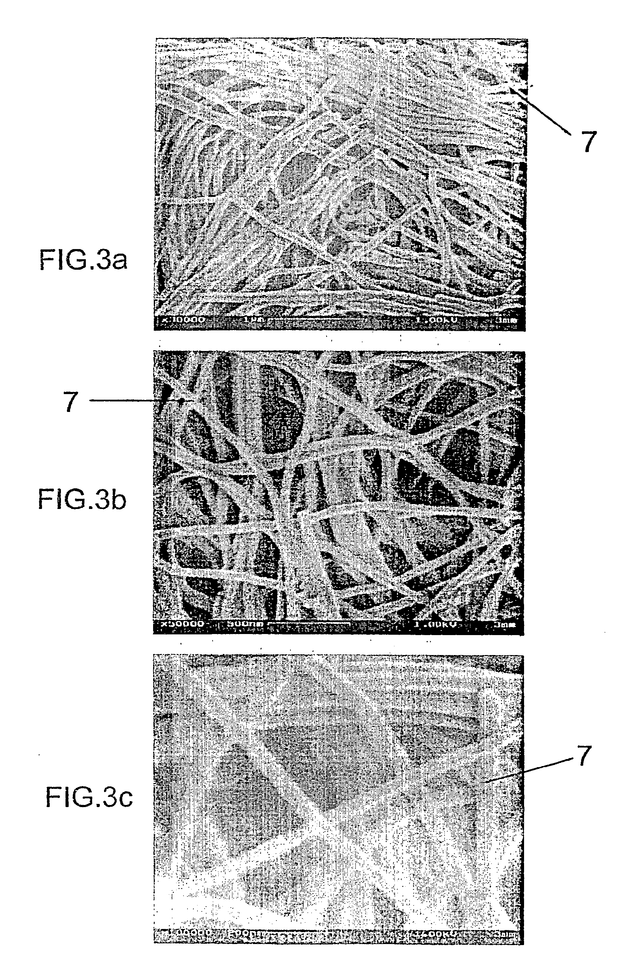

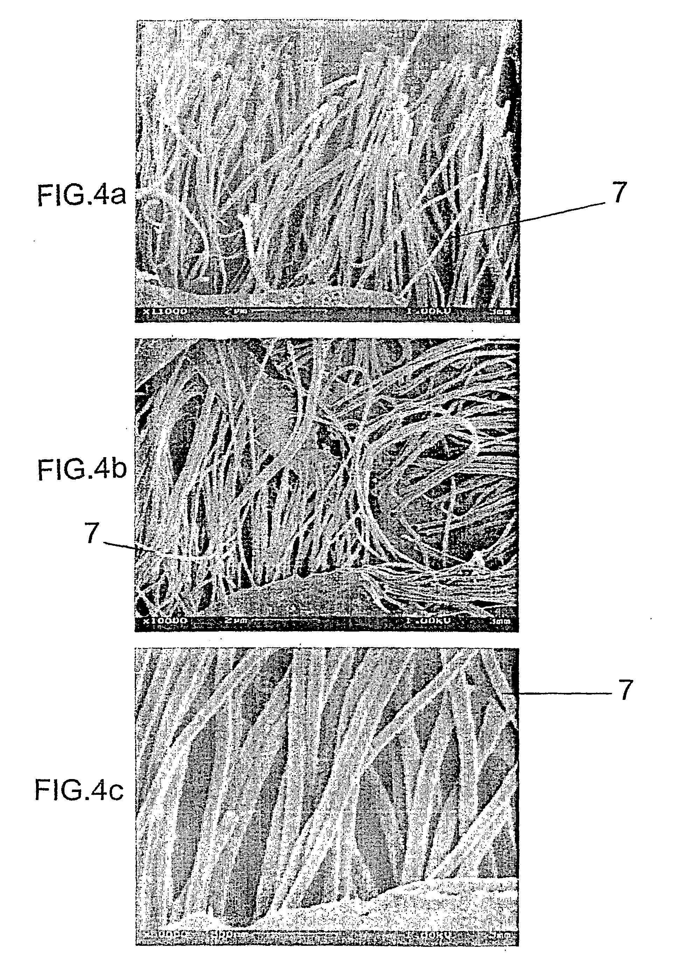

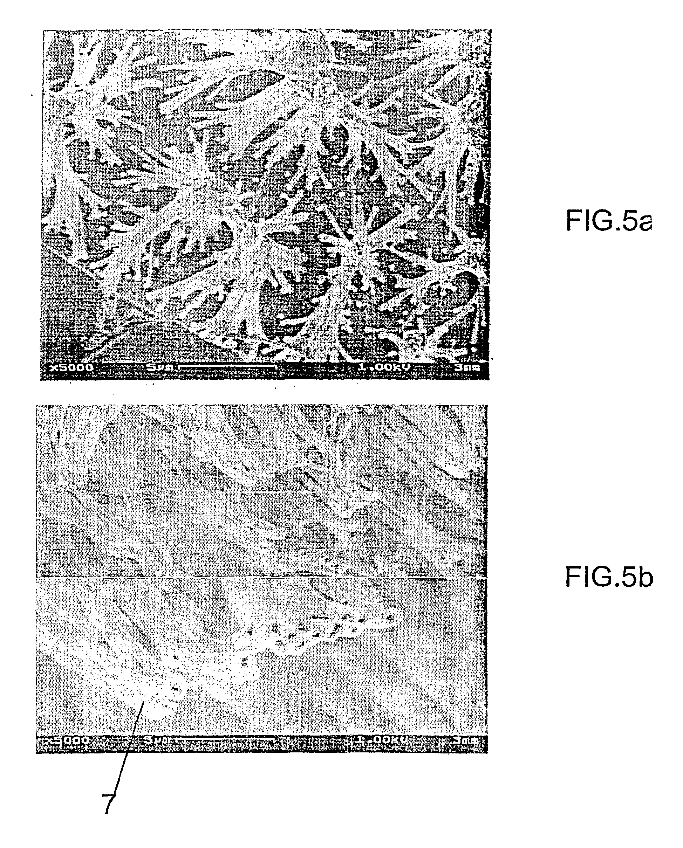

Les figures 3a à 3c, 4a à 4c et 5a, 5b sont des photographies prises au MEB de nanotubes 7 réalisés à partir d'une feuille 1 de KAPTON ® de type HN 30, d'une épaisseur de 7,6 µm, présentant des pores 6.

### Figures 3a à 3c

Le bombardement 2 de la feuille 1 a été réalisé par un faisceau d'ions Xe, d'énergie égale à 574 MeV. La feuille 1 a ensuite été soumise au rayonnement d'un spot halogène pendant 10 heures puis à une attaque chimique dans une solution de NaOCl à 0,02 N et 70°C pendant 7 minutes.

Des nanotubes 7 de polypyrrole ont été synthétisés chimiquement dans les pores 6 créés dans la feuille 1. Les nanotubes 7 présentent une forme sensiblement cylindrique sur toute leur longueur, et des diamètres sensiblement égaux, de l'ordre de 40 nm.

### Figures 4a à 4c

Le bombardement 2 de la feuille 1 a été réalisé par un faisceau d'ions Xe, d'énergie égale à 574 MeV. La feuille 1 a ensuite été soumise au rayonnement d'un spot halogène pendant 10 heures puis à une attaque chimique dans une solution de NaOCl à 0,2 N et 70°C pendant 12 minutes.

Des nanotubes 7 de polypyrrole ont été synthétisés chimiquement dans les pores 6 créés dans la feuille 1. Les nanotubes 7 présentent une forme sensiblement cylindrique sur toute leur longueur, et des diamètres sensiblement égaux, de l'ordre de 80 nm.

### Figures 5a et 5b

Le bombardement 2 de la feuille 1 a été réalisé par un faisceau d'ions Xe, d'énergie égale à 574 MeV. La feuille 1 a ensuite été soumise pendant 8 heures au rayonnement d'une source lumineuse composée de 100 LED (dont la puissance individuelle est comprise entre 1 et 10 mW) émettant dans le bleu, puis à une attaque chimique dans une solution de NaOCl à 0,2 N et 70°C pendant 24 minutes.

Les nanotubes 7 de polypyrrole, synthétisés chimiquement dans les pores 6 créés dans la feuille 1, présentent là encore une forme sensiblement cylindrique sur toute leur longueur, et des diamètres sensiblement égaux, de l'ordre de 0,135 µm.

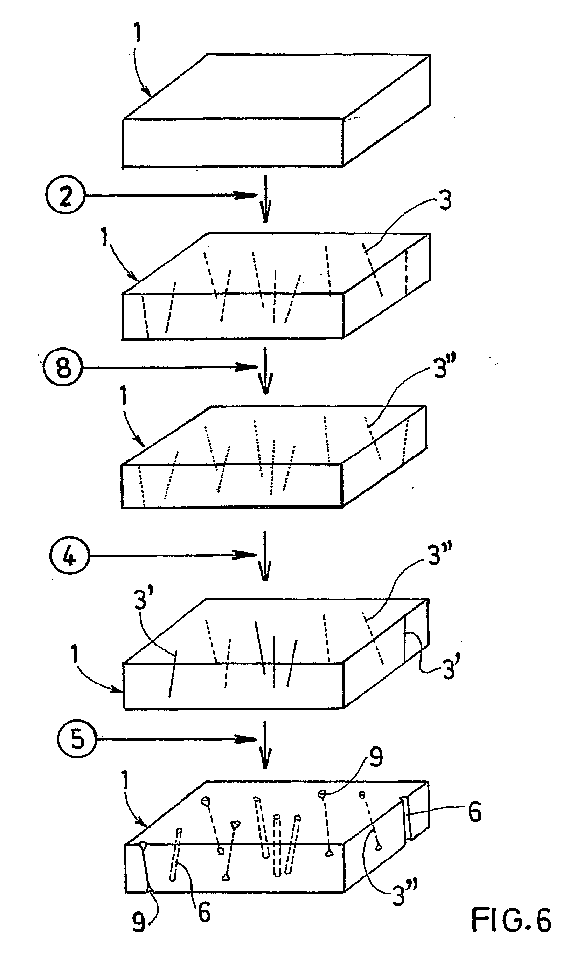

On se réfère à présent à la figure 6, qui représente schématiquement les différentes étapes d'un deuxième mode de réalisation du procédé, permettant de réaliser un « patterning », c'est-à-dire une feuille 1 présentant des pores 6 dans des zones prédéterminées.

Comme dans le cas du procédé représenté sur la figure 1, la feuille 1 est tout d'abord soumise à un bombardement ionique 2 qui conduit à la formation de traces 3.

Ensuite, la feuille 1 est soumise à un traitement thermique global 8 qui engendre un effacement partiel des traces 3. Les traces partiellement effacées 3" seront très lentement attaquées lors de l'étape d'attaque chimique ultérieure.

Certaines zones prédéterminées seulement de la feuille 1 sont alors soumises à un rayonnement dans le domaine du visible 4. Ceci peut être réalisé :
- soit par l'intermédiaire d'un masque comportant des orifices laissant passer le rayonnement visible 4 seulement sur lesdites zones prédéterminées de la feuille 1 ;
- soit par l'utilisation d'un laser émettant dans le visible, dirigé exclusivement vers lesdites zones prédéterminées de la feuille 1. L'utilisation d'un laser permet une grande précision quant aux zones soumises au rayonnement.

Les traces partiellement effacées 3" situées dans les zones de la feuille 1 soumises au rayonnement sont sensibilisées, des traces plus marquées 3' étant ainsi obtenues.

A l'inverse, les zones de la feuille 1 non soumises au rayonnement ne présentent que des traces partiellement effacées 3".

Enfin, la feuille 1 est soumise à une attaque chimique 5.

Les parties de la feuille 1 endommagées par les étapes précédentes du procédé, à savoir les traces 3' plus marquées, sont rapidement attaquées par la solution corrosive, d'où la création de pores 6 de forme sensiblement cylindrique et de diamètres sensiblement égaux.

En revanche, les traces partiellement effacées 3" de la feuille 1, situées dans les zones de la feuille 1 non soumises au rayonnement 4, ne sont que très lentement attaquées chimiquement. Les portions de ces traces partiellement effacées 3" situées au voisinage d'une face de la feuille 1 ont subi un début d'attaque chimique, conduisant à la formation de petites cavités 9 en surface de la feuille 1. Toutefois, les traces partiellement effacées 3" ne conduisent pas à la création de pores 6 débouchant sur chacune des faces opposées de la feuille 1.

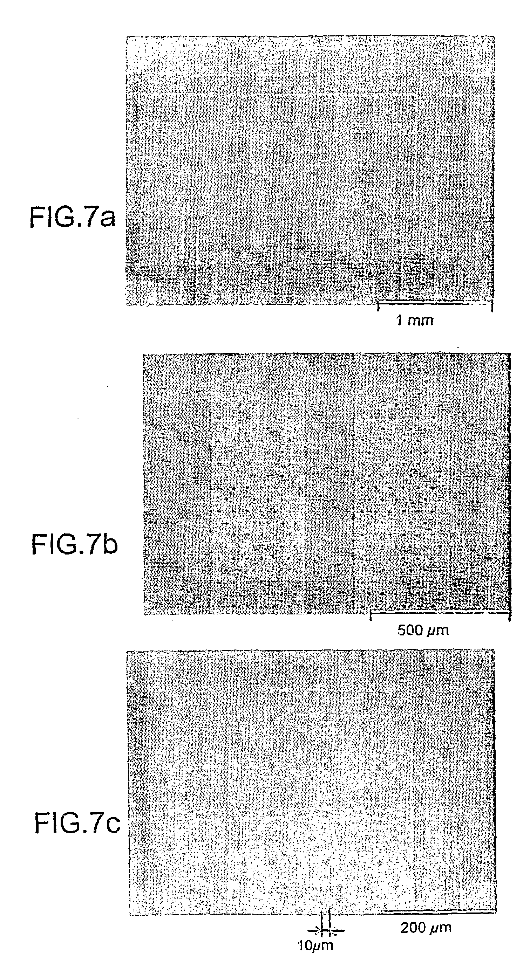

Les figures 7a à 7c sont des photographies prises par transparence en microscopie optique d'une feuille de KAPTON ® de type HN 30, d'une épaisseur de 7,6 µm, présentant des pores 6 obtenus par « patterning » sur certaines zones prédéterminées de ladite feuille 1.

Le bombardement 2 de la feuille 1 a été réalisé par un faisceau d'ions Xe, d'énergie égale à 574 MeV. La feuille 1 a ensuite été soumise pendant 30 minutes à un traitement thermique global à 400°C, puis à un rayonnement sélectif dans le domaine du visible, au moyen d'un masque. Enfin, la feuille 1 a été soumise à une attaque chimique dans une solution de NaOCl à 2 N et 70°C pendant 9 minutes.

Sur les figures 7a à 7c, les zones sombres représentent des zones poreuses, c'est-à-dire comportant des pores 6, tandis que les zones plus claires ne comprennent pas de pores 6 ou uniquement des amorces de pores (petites cavités 9 en surface de la feuille 1). Selon le masque employé, différentes configurations de zones présentant ou non des pores 6 peuvent être obtenues.

Le procédé tel que précédemment décrit permet d'améliorer la forme des pores créés dans les feuilles minces de polyimide, ainsi que la constance du diamètre de ces pores. Des feuilles minces de polyimide nanoporeuses ou microporeuses de bien meilleure qualité peuvent ainsi être obtenues.

## Revendications

1. Procédé de création de pores (6) de taille nanométrique à micrométrique dans une feuille (1) mince de polyimide, dans lequel la feuille est soumise, dans cet ordre, à :
- un bombardement ionique (2) ;
- un rayonnement dans le domaine du visible (4) ;
- une attaque chimique (5).

2. Procédé selon la revendication 1, **caractérisé en ce que** la feuille (1) est soumise à un rayonnement (4) dont la longueur d'onde est comprise entre 360 et 550 nm.

3. Procédé selon la revendication 1 ou 2, **caractérisé en ce que** la feuille (1) est soumise à un rayonnement (4) dont la longueur d'onde est comprise entre 450 et 530 nm.

4. Procédé selon l'une quelconque des revendications 1 à 3, **caractérisé en ce qu'**on utilise une source émettant dans le domaine du visible et qui dégage une quantité de chaleur suffisamment faible pour ne pas nécessiter de refroidissement de la feuille (1).

5. Procédé selon l'une quelconque des revendications 1 à 4, **caractérisé en ce que** la feuille (1) est soumise au rayonnement d'une ou de plusieurs LED (diode électroluminescente) émettant à des longueurs d'onde comprises entre 450 et 530 nm.

6. Procédé selon la revendication 5, **caractérisé en ce que** la feuille (1) est soumise au rayonnement de la ou des LED pendant une durée comprise entre 1 et 10 heures.

7. Procédé selon l'une quelconque des revendications 1 à 3, **caractérisé en ce que** la feuille (1) est soumise au rayonnement d'un spot halogène pendant une durée de l'ordre de 10 heures à une semaine.

8. Procédé selon l'une quelconque des revendications 1 à 3, **caractérisé en ce que** la feuille (1) est soumise au rayonnement d'une source UV - Hg couplée à un filtre UV, émettant à des longueurs d'onde comprises entre 360 et 580 nm.

9. Procédé selon l'une quelconque des revendications 1 à 8, **caractérisé en ce que** la feuille (1) est soumise à l'attaque chimique (5) pendant moins d'une heure.

10. Procédé selon l'une quelconque des revendications 1 à 9, **caractérisé en ce que** la feuille (1) est soumise à l'attaque chimique (5) pendant moins de 15 minutes.

11. Procédé selon l'une quelconque des revendications 1 à 10, **caractérisé en ce que** l'attaque chimique (5) est effectuée par une solution de NaOCl de concentration comprise entre 0,01 N et 5 N à une température comprise entre 30 et 100°C.

12. Procédé selon l'une quelconque des revendications 1 à 11, **caractérisé en ce que** la feuille (1) est bombardée par un faisceau d'ions Xe (xénon) d'énergie voisine de 570 MeV.

13. Procédé selon l'une quelconque des revendications 1 à 12, **caractérisé en ce que**, après avoir subi le bombardement ionique (2) et avant d'être soumise au rayonnement dans le domaine du visible (4), la feuille (1) est soumise à un traitement thermique global (8), et **en ce que** certaines zones prédéterminées de la feuille (1) seulement sont soumises audit rayonnement (4).

14. Feuille mince de polyimide comportant des pores (6) de taille nanométrique à micrométrique, **caractérisée en ce que** les pores (6) sont sensiblement cylindriques, c'est-à-dire présentent un diamètre variant de moins de 20 % sur toute l'épaisseur (e) de la feuille (1), et présentent des diamètres sensiblement égaux, c'est-à-dire répartis dans une gamme de ± 10 % autour d'une valeur moyenne.

15. Feuille selon la revendication 14, **caractérisée en ce qu'**elle est réalisée en KAPTON ®.

16. Feuille selon la revendication 14 ou 15, **caractérisée en ce qu'**elle présente une épaisseur comprise entre 2 et 100 µm.

17. Feuille selon la revendication 14 ou 15, **caractérisée en ce qu'**elle présente une épaisseur comprise entre 5 nm et 10 µm, et **en ce qu'**elle est déposée sur un support.

## Claims

1. A method of creating pores (6) of nanometric to micrometric size in a thin sheet (1) of polyimide, in which method, the sheet is subjected, in the following order, to:
- ion bombardment (2);
- radiation in the visible domain (4); and
- chemical etching (5).

2. A method according to claim 1, **characterized in that** the sheet (1) is subjected to radiation (4) whose wavelength lies in the range 360 nm to 550 nm.

3. A method according to claim 1 or claim 2, **characterized in that** the sheet (1) is subjected to radiation (4) whose wavelength lies in the range 450 nm to 530 nm.

4. A method according to any one of claims 1 to 3, **characterized in that** a source is used that emits in the visible domain and that gives off a sufficiently small quantity of heat not to require the sheet (1) to be cooled.

5. A method according to any one of claims 1 to 4, **characterized in that** the sheet (1) is subjected to radiation from one or more light-emitting diodes (LEDs) emitting at wavelengths lying in the range 450 nm to 530 nm.

6. A method according to claim 5, **characterized in that** the sheet (1) is subjected to radiation from the LEDs for a time lying in the range 1 hour to 10 hours.

7. A method according to any one of claims 1 to 3, **characterized in that** the sheet (1) is subjected to radiation from a halogen spotlight for a time approximately in the range 10 hours to one week.

8. A method according to any one of claims 1 to 3, **characterized in that** the sheet (1) is subjected to radiation from an Hg - UV source coupled to a UV filter, emitting at wavelengths lying approximately in the range 360 nm to 580 nm.

9. A method according to any one of claims 1 to 8, **characterized in that** the sheet (1) is subjected to chemical etching (5) for less than one hour.

10. A method according to any one of claims 1 to 9, **characterized in that** the sheet (1) is subjected to chemical etching for less than 15 minutes.

11. A method according to any one of claims 1 to 10, **characterized in that** the chemical etching (5) is performed with an NaOCl solution of concentration lying in the range 0.01 N to 5 N at a temperature lying in the range 30°C to 100°C.

12. A method according to any one of claims 1 to 11, **characterized in that** the sheet (1) is bombarded with a beam of Xe (xenon) ions of energy in the vicinity of 570 MeV.

13. A method according to any one of claims 1 to 12, **characterized in that**, after being subjected to ion bombardment (2) and after being subjected to radiation in the visible domain (4), the sheet (1) is subjected to overall heat treatment (8), and **in that** only certain predetermined zones of the sheet (1) are subjected to said radiation (4).

14. A thin sheet of polyimide provided with pores (6) of nanometric to micrometric size, **characterized in that** the pores (6) are substantially cylindrical, i.e. they are of diameter varying by less than 20% over the entire thickness (e) of the sheet (1), and they have diameters that are substantially equal, i.e. lying within a range of ±10% about a mean value.

15. A sheet according to claim 14, **characterized in that** it is made of KAPTON®.

16. A sheet according to claim 14 or claim 15, **characterized in that** it presents a thickness lying in the range 2 µm to 100 µm.

17. A sheet according to claim 14 or claim 15, **characterized in that** it presents a thickness lying in the range 5 nm to 10 µm, and **in that** it is deposited on a backing.

## Patentansprüche

1. Verfahren zur Herstellung von Poren (6) nanometrischer bis mikrometrischer Größe in einem dünnen Polyimidblatt, bei dem das Blatt in dieser Reihenfolge Folgendem unterzogen wird:
- einem Ionenbeschuss (2)
- einer Bestrahlung im sichtbaren Bereich (4);
- einem chemischen Angriff (5).

2. Verfahren gemäß Anspruch 1, **dadurch gekennzeichnet, dass** das Blatt (1) einer Bestrahlung (4) unterzogen wird, deren Wellenlänge zwischen 360 und 550 nm inbegriffen ist.

3. Verfahren gemäß Anspruch 1 oder 2, **dadurch gekennzeichnet, dass** das Blatt (1) einer Bestrahlung (4) unterzogen wird, deren Wellenlänge zwischen 450 und 530 nm unbegriffen ist.

4. Verfahren gemäß Anspruch 1 bis 3, **dadurch gekennzeichnet, dass** man eine im sichtbaren Bereich emittierende Quelle einsetzt, die eine ausreichend geringe Wärmemenge abgibt, um keinerlei Kühlung des Blattes (1) zu erfordern.

5. Verfahren gemäß Anspruch 1 bis 4, **dadurch gekennzeichnet, dass** das Blatt (1) einer Bestrahlung einer oder mehrerer in zwischen 450 und 530 nm inbegriffenen Wellenlängen emittierenden LED (Lumineszenzdioden) unterzogen wird.

6. Verfahren gemäß Anspruch 5, **dadurch gekennzeichnet, dass** das Blatt (1) während einer zwischen 1 und 10 Stunden inbegriffenen Dauer der Bestrahlung der LED unterzogen wird.

7. Verfahren gemäß Anspruch 1 bis 3, **dadurch gekennzeichnet, dass** das Blatt (1) während einer in der Größenordnung von 10 Stunden bis einer Woche inbegriffenen Dauer der Bestrahlung eine Halogenspots unterzogen wird.

8. Verfahren gemäß Anspruch 1 bis 3, **dadurch gekennzeichnet, dass** das Blatt (1) der Bestrahlung einer mit einem UV-Filter gekoppelten, zwischen 360 und 580 nm inbegriffenen Wellenlängen ausgebenden UV - Hg-Quelle unterzogen wird.

9. Verfahren gemäß Anspruch 1 bis 8, **dadurch gekennzeichnet, dass** das Blatt (1) weniger als eine Stunde lang dem chemischen Angriff (5) unterzogen wird.

10. Verfahren gemäß Anspruch 1 bis 9, **dadurch gekennzeichnet, dass** das Blatt (1) weniger als 15 Minuten lang dem chemischen Angriff (5) unterzogen wird.

11. Verfahren gemäß Anspruch 1 bis 10, **dadurch gekennzeichnet, dass** der chemische Angriff (5) durch eine NaOCl-Lösung in einer zwischen 0,01 und 5 N inbegriffenen Konzentration bei einer zwischen 30 und 100°C inbegriffenen Temperatur durchgeführt wird.

12. Verfahren gemäß Anspruch 1 bis 11, **dadurch gekennzeichnet, dass** das Blatt (1) durch einen Ionenstrahl Xe (Xenon) mit einer Energie von ungefähr 570 MeV beschossen wird.

13. Verfahren gemäß Anspruch 1 bis 12, **dadurch gekennzeichnet, dass** das Blatt (1) einer globalen Wärmebehandlung (8) unterzogen wird, nachdem es dem Ionenbeschuss (2) unterzogen wurde und bevor es der Bestrahlung im sichtbaren Bereich (4) unterzogen wird, und dass nur einige vorbestimmte Bereiche des Blattes (1) der genannten Bestrahlung (4) unterzogen werden.

14. Dünnes Polyimidblatt mit Poren (6) nanometrischer bis mikrometrischer Größe, **dadurch gekennzeichnet, dass** die Poren (6) deutlich zylindrisch sind, d. h. auf der gesamten Dicke (e) des Blattes (1) einen um weniger als 20 % abweichenden Durchmesser haben und deutlich gleiche Durchmesser aufweisen, d. h. in einem Bereich von +/- 10 % um einen durchschnittlichen Wert verteilt sind.

15. Blatt gemäß Anspruch 14, **dadurch gekennzeichnet, dass** es aus KAPTON® realisiert ist.

16. Blatt gemäß Anspruch 14 oder 15, **dadurch gekennzeichnet, dass** es eine zwischen 2 und 100 m inbegriffene Dicke aufweist.

17. Blatt gemäß Anspruch 14 oder 15, **dadurch gekennzeichnet, dass** es eine zwischen 5 nm und 10 m inbegriffene Dicke aufweist und dass es auf einen Träger aufgebracht wird.
